# EUROPEAN PATENT APPLICATION

(11) **EP 1 985 841 A1**
(43) Date of publication of application: **29.10.2008**
(21) Application number: 07008685.5
(22) Date of filing: 27.04.2007
(51) Int. Cl.: F02M 55/00, F02M 55/02

(54) **Fluid inlet arrangement for an injection valve and injection valve**

(71) Applicant: Continental Automotive GmbH, 30165 Hannover (DE)
(72) Inventor: D'Onofrio, Mario, 19035 S. Stefano Magra (SP) (IT); Fischetti, Gianbattista, 56021 Cascina (PI) (IT)

(57) **Abstract**

The invention relates to a fluid inlet arrangement for an injection valve and an injection valve. A fluid inlet arrangement (14) for an injection valve (10), the injection valve (10) comprising a housing including a central longitudinal axis (A), the housing comprising a cavity (24) with a fluid inlet portion (26) and a fluid outlet portion (28), the fluid inlet portion (26) forming an inner surface (60) of the housing, and a valve needle (22) axially movable in the cavity (24), the valve needle (10) preventing a fluid flow through the fluid outlet portion (28) in a closing position and releasing the fluid flow through the fluid outlet portion (28) in further positions, the fluid inlet arrangement (14) comprising an upper housing (56) including a central longitudinal axis (B), the upper housing being part of the housing and comprising the fluid inlet portion (26), and an inlet fitting body (40) arranged in the fluid inlet portion (26) and being mechanically coupled to the upper housing (56) and comprising an inlet fitting cavity (42) being hydraulically coupled to the fluid inlet portion (26), wherein the inlet fitting body (40) has an end section (46) with an outer surface (48), the end section (46) being tapered in a way that the outer surface (48) of the end section (46) sealingly engages the inner surface (60) of the fluid inlet portion (26).

## Description

The invention relates to a fluid inlet arrangement for an injection valve and an injection valve.

Injection valves are in wide spread use, in particular for internal combustion engines where they may be arranged in order to dose the fluid into an intake manifold of the internal combustion engine or directly into the combustion chamber of a cylinder of the internal combustion engine.

In order to enhance the combustion process in view of the creation of unwanted emissions, the respective injection valve may be suited to dose fluids under very high pressures. The pressures may be in case of a gasoline engine, for example the range of up to 200 bar or in the case of diesel engines in the range of up to 2,000 bar. The injection of fluids under such high pressures has to be carried out very precisely.

Injection valves for an internal combustion engine comprise fluid inlet arrangements which are usually connected to a high pressure fuel chamber of an internal combustion engine, where the fuel is stored under very high pressures.

The object of the invention is to create a fluid inlet arrangement that is simply to be manufactured and which facilitates a reliable and precise supply of fluid to the injection valve.

These objects are achieved by features of the independent claims. Advantageous embodiments of the invention are given in the sub-claims.

According to a first aspect the invention is distinguished by a fluid inlet arrangement for an injection valve, the injection valve comprising a housing including a central longitudinal axis, the housing comprising a cavity with a fluid inlet portion and a fluid outlet portion, the fluid inlet portion forming an inner surface of the housing, and a valve needle axially movable in the cavity, the valve needle preventing a fluid flow through the fluid outlet portion in a closing position and releasing the fluid flow through the fluid outlet portion in further positions, the fluid inlet arrangement comprising an upper housing including a central longitudinal axis, the upper housing being part of the housing and comprising the fluid inlet portion, and an inlet fitting body arranged in the fluid inlet portion and being mechanically coupled to the upper housing and comprising an inlet fitting cavity being hydraulically coupled to the fluid inlet portion, wherein the inlet fitting body has an end section with an outer surface, the end section being tapered in a way that the outer surface of the end section sealingly engages the inner surface of the fluid inlet portion.

This has the advantage that it is possible to obtain good sealing conditions between the upper housing and the inlet fitting body. Furthermore, no gasket is necessary between the upper housing and the inlet fitting body. Additionally, only low forces are necessary to fix the inlet fitting body in the upper housing, in particular only a low torque is necessary in the case of a screw coupling between the upper housing and the inlet fitting body. Consequently, as only a low torque is necessary the life-time of the different components can be high.

In an advantageous embodiment of the invention the inner surface of the fluid inlet portion is forming an inner edge of the upper housing, and the outer surface of the end section is designed to sealingly engage the inner edge of the upper housing. By this a simple construction of the fluid inlet arrangement is possible. Additionally, a sealing by a plastic deformation of the end section of the inlet fitting body is possible.

In a further advantageous embodiment of the invention the inner surface of the fluid inlet portion comprises a seat being conically shaped and the outer surface of the end section is conically shaped, and the seat of the fluid inlet portion is designed to sealingly engage the outer surface of the end section. This has the advantage that a sealing by elastic deformation of the inner surface of the fluid inlet portion and/or the outer surface of the end section is possible. Consequently, very good sealing conditions between the upper housing and the inlet fitting body are possible even in the case of demounting and remounting of the inlet fitting body.

In a further advantageous embodiment of the invention a cone angle of the seat of the fluid inlet portion is bigger than a cone angle of the outer surface of the end section. This has the advantage that a good sealing is possible as only low forces are necessary to fix the inlet fitting body in the upper housing.

In a further advantageous embodiment of the invention the end section of the inlet fitting body is of a frustro-conical shape.

In a further advantageous embodiment of the invention the end section of the inlet fitting body has a spherical segment. These embodiments have the advantage that a big contact zone between the upper housing and the inlet fitting body is possible. Consequently, in particular only a very low torque is necessary in the case of a screw coupling between the upper housing and the inlet fitting body. Furthermore, the diameter of the inlet fitting body can be reduced. Therefore, it is possible that only little material for the inlet fitting body is necessary.

According to a second aspect the invention is distinguished by an injection valve comprising the fluid inlet arrangement of the first aspect of the invention.

Exemplary embodiments of the invention are explained in the following with the help of schematic drawings. These are as follows:
- Figure 1,: an injection valve in a longitudinal section view,
- Figure 2,: a first embodiment of a fluid inlet arrangement for the injection valve according to figure 1 in a longitudinal section view,
- Figure 3,: a further embodiment of the fluid inlet arrangement for the injection valve in a longitudinal section view, and
- Figure 4,: a further embodiment of the fluid inlet arrangement for the injection valve in a longitudinal section view.

Elements of the same design and function that appear in different illustrations are identified by the same reference characters.

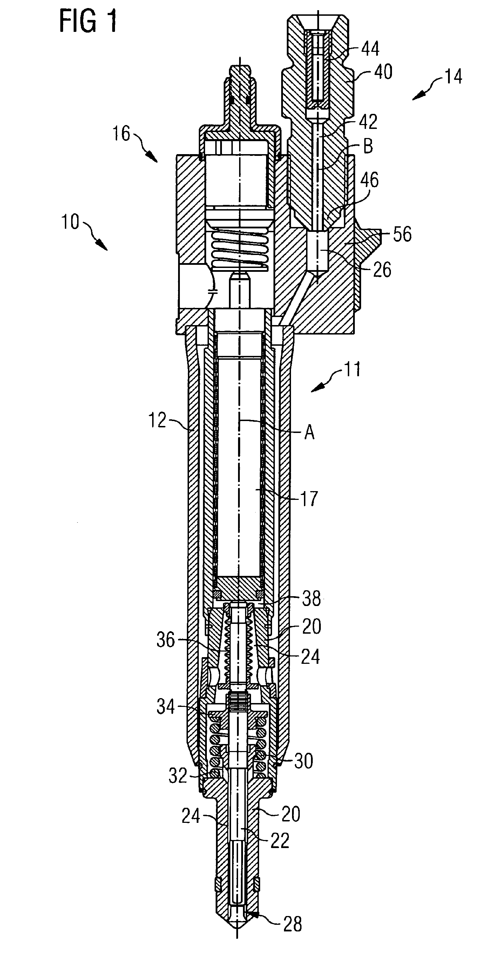

An injection valve 10 (figure 1) that is used as a fuel injection valve for an internal combustion engine, comprises a valve assembly 11, a fluid inlet arrangement 14 and an actuator unit 16.

The injection valve 10 has a lower housing 12 with a tubular shape and a central longitudinal axis A. The actuator unit 16 is inserted into the lower housing 12 and comprises a piezo actuator 17, which changes its axial length depending on a control signal applied to it. The actuator unit 16 may, however, also comprise another type of actuator, which is known to a person skilled in the art for that purpose. Such an actuator may be, for example, a solenoid.

The valve assembly 11 comprises a valve body 20 and a cavity 24 which is axially led through the valve body 20. On one of the free ends of the cavity 24, a fluid outlet portion 28 is formed which is closed or open depending on the axial position of a valve needle 22.

The valve body 20 has a valve body spring rest 32 and the valve needle 22 comprises a valve needle spring rest 34, both spring rests 32, 34 supporting a spring 30 arranged between the valve body 20 and the valve needle 22.

The injection valve 10 is of an outward opening type. In an alternative embodiment of the injection valve 10 it may be of an inward opening type. Between the valve needle 22 and the valve body 20 a bellow 36 is arranged which is sealingly coupling the valve body 20 with the valve needle 22. By this a fluid flow between the cavity 24 and a chamber 38 is prevented. Furthermore, the bellow 36 is formed and arranged in a way that the valve needle 22 is actuable by the actuator unit 16.

The fluid inlet arrangement 14 is designed to be connected to a high pressure fuel chamber of an internal combustion engine, the fuel is stored under high pressure, for example, under the pressure of above 200 bar.

The fluid inlet arrangement 14 has an upper housing 56 with a central longitudinal axis B. Together, the upper housing 56 and the lower housing 12 are forming a housing of the injection valve 10. The cavity 24 of the valve body 20 comprises a fluid inlet portion 26 which is arranged in the upper housing 56.

Furthermore, the fluid inlet arrangement 14 comprises an inlet fitting body 40 which is arranged in the upper housing 56. The inlet fitting body 40 comprises an inlet fitting cavity 42 which is preferably formed as a bore hole and which is hydraulically coupled to the fluid inlet portion 26. The inlet fitting cavity 42 comprises a filter 44 for filtering out particles which are transported with the fluid.

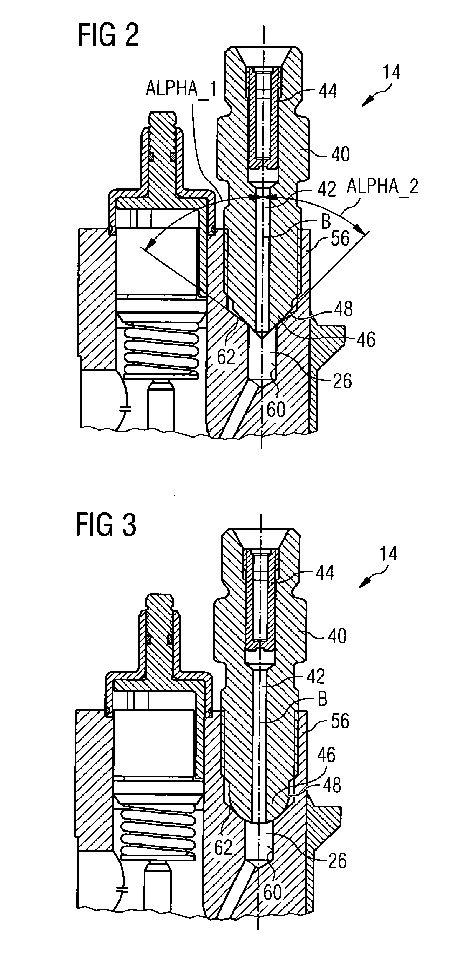

Figure 2 shows an enlarged view of a first embodiment of the fluid inlet arrangement 14. The inlet fitting body 40 has an end section 46 with an outer surface 48. The end section 46 of the inlet fitting body 40 is tapered in a way that the outer surface 48 of the end section 46 sealingly engages an inner surface 60 of the fluid inlet portion 26. In the embodiment shown in figure 2 the end section 46 of the inlet fitting body 40 has a frustro-conical shape.

The inner surface 60 of the fluid inlet portion 26 has a seat 62 which is conically shaped. Furthermore, the outer surface 48 of the end section 46 is conically shaped. Consequently, the seat 62 of the fluid inlet portion 26 is designed to sealingly engage the outer surface 48 of the end section 46.

The seat 62 of the fluid inlet portion 26 has a cone angle ALPHA_1 relative to longitudinal axis B of the fluid inlet arrangement 14. The outer surface 48 of the end section 46 has a cone angle ALPHA_2 relative to longitudinal axis B of the fluid inlet arrangement 14. The cone angle ALPHA_2 is smaller than the cone angle ALPHA_1. The inner surface 60 of the fluid inlet portion 26 forms an inner edge 58 of the upper housing 56. As the cone angle ALPHA_2 is smaller than the cone angle ALPHA_1 the outer surface 48 of the end section 46 is sealingly engaging the inner edge 58 of the upper housing 56. By this a very good sealing between the upper housing 56 and the inlet fitting body 40 is possible, even in the case of the mounting and new remounting of the inlet fitting body 40.

In a further embodiment of the fluid inlet arrangement 14 shown in Figure 3, the end section 46 of the inlet fitting body 40 has a spherical segment. By this a big contact zone between the upper housing 56 and the inlet fitting body 40 is possible. Consequently, a low torque force is necessary in case of a screw coupling between the upper housing 56 and the inlet fitting body 40.

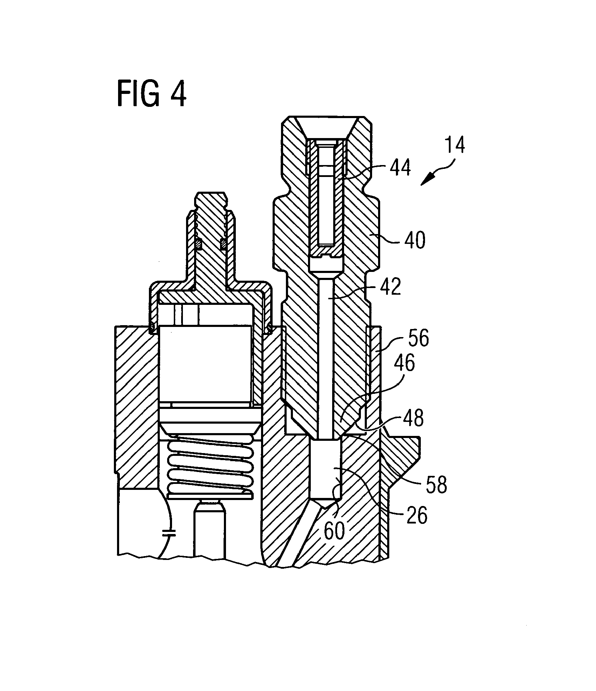

In the embodiment of figure 4 the fluid inlet portion 26 has a step which forms the inner edge 58 of the upper housing 56 in the fluid inlet portion. The outer surface 48 of the end section 46 which is conically shaped, engages the inner edge 58 of the upper housing 56. Thereby, a plastic deformation of the outer surface 48 of the end section 46 is enabled, and a good sealing between the inner edge 58 of the upper housing 56 and the outer surface 48 of the end section can be obtained.

In the following, the function of the injection valve 10 will be described:

The fluid is led from the inlet fitting cavity 42 in the inlet fitting body 40 to the fluid inlet portion 26 of the upper housing 56. Furthermore, the fluid is running through to the lower housing 12 to the fluid outlet portion 28.

The valve needle 22 prevents a fluid flow through the fluid outlet portion 28 in the valve body 20 in a closing position of the valve needle 22. Outside of the closing position of the valve needle 22, the valve needle 22 enables the fluid flow through the fluid outlet portion 28.

The piezo actuator 17 may change its axial length if it gets energized. By changing its length the piezo actuator 17 may effect a force on the valve needle 22. The valve needle 22 is able to move in axial direction out of the closing position. Outside the closing position of the valve needle 22 there is a gap between the valve body 20 and the valve needle 22 at an axial end of the injection valve 10 facing away from the piezo actuator 17. The spring 30 can force the valve needle 22 via the valve needle spring rest 34 towards the piezo actuator 17. In the case the piezo actuator 17 is deenergized the piezo actuator 17 shortens its length. The spring 30 can force the valve needle 22 to move in axial direction in its closing position. It is depending on the force balance between the force on the valve needle 22 caused by the piezo actuator 17 and the force on the valve needle 22 caused by the spring 30 whether the valve needle 22 is in its closing position or not.

## Claims

1. Fluid inlet arrangement (14) for an injection valve (10), the injection valve (10) comprising
- a housing including a central longitudinal axis (A), the housing comprising a cavity (24) with a fluid inlet portion (26) and a fluid outlet portion (28), the fluid inlet portion (26) forming an inner surface (60) of the housing, and
- a valve needle (22) axially movable in the cavity (24), the valve needle (10) preventing a fluid flow through the fluid outlet portion (28) in a closing position and releasing the fluid flow through the fluid outlet portion (28) in further positions,
the fluid inlet arrangement (14) comprising
- an upper housing (56) including a central longitudinal axis (B), the upper housing being part of the housing and comprising the fluid inlet portion (26), and
- an inlet fitting body (40) arranged in the fluid inlet portion (26) and being mechanically coupled to the upper housing (56) and comprising an inlet fitting cavity (42) being hydraulically coupled to the fluid inlet portion (26), wherein
the inlet fitting body (40) has an end section (46) with an outer surface (48), the end section (46) being tapered in a way that the outer surface (48) of the end section (46) sealingly engages the inner surface (60) of the fluid inlet portion (26).

2. Fluid inlet arrangement (14) in accordance with claim 1, with the inner surface (60) of the fluid inlet portion (26) forming an inner edge (58) of the upper housing (56), and the outer surface (48) of the end section (46) being designed to sealingly engage the inner edge (58) of the upper housing (56).

3. Fluid inlet arrangement (14) in accordance with claim 1, with the inner surface (60) of the fluid inlet portion (26) comprising a seat (62) being conically shaped and the outer surface (48) of the end section (46) being conically shaped, and the seat (62) of the fluid inlet portion (26) being designed to sealingly engage the outer surface (48) of the end section (46).

4. Fluid inlet arrangement (14) in accordance with claim 3, with a cone angle (ALPHA_1) of the seat (62) of the fluid inlet portion (26) being bigger than a cone angle (ALPHA_2) of the outer surface (48) of the end section (46).

5. Fluid inlet arrangement (14) in accordance with one of the preceding claims, with the end section (46) of the inlet fitting body (40) being of a frustro-conical shape.

6. Fluid inlet arrangement (14) in accordance with one of the claims 1 to 2, with the end section (46) of the inlet fitting body (40) having a spherical segment.

7. Injection valve (10) comprising the fluid inlet arrangement (14) in accordance with one of the preceding claims.
